Europäisches Patentamt

European Patent Office

Office européen des brevets

(19)

(11) **EP 1 220 173 A1**

(12) **EUROPEAN PATENT APPLICATION**

(43) Date of publication:
03.07.2002 Bulletin 2002/27

(51) Int Cl.$^7$: **G07F 17/16**, G06F 1/00

(21) Application number: 00403721.4

(22) Date of filing: 29.12.2000

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **THOMSON multimedia**
**92100 Boulogne Billancourt (FR)**

(72) Inventors:
• **Laurent, Christophe**
**92100 Boulogne-Billancourt (FR)**

• **Durand, Alain**
**92100 Boulogne-Billancourt (FR)**
• **Letellier, Philippe**
**92100 Boulogne-Billancourt (FR)**

(74) Representative: **Kohrs, Martin et al**
**Thomson multimedia**
**46, quai A. Le Gallo**
**92100 Boulogne-Billancourt (FR)**

(54) **System and method for the secure distribution of digital content in a sharing network**

(57) The system for distributing a digital content, created by a content provider (301 - 304), to a requester (200) through a sharing network (110), comprises a central authority (201 - 204) working on behalf of the content provider and a responder (300), registered with the central authority.

When the responder (300) receives a request (1) for a content corresponding to a file stored on his/her computer, content purchase information data (4) are sent to the requester. The requester then buys the content to the central authority and receives a proof of buying (11). In response to the sending of this proof of buying to the responder, the requester receives the file corresponding to the requested content.

The responder then receives a compensation from the central authority for his/her participation in the distribution of the content.

Fig. 3

EP 1 220 173 A1

**Description**

Field of the invention

The invention relates to a system and a method for distributing digital content through a sharing network.

Background art

With the increasing use of the Internet, distributed sharing networks in which users propose digital contents for sharing are becoming more and more popular. Examples of such systems are the NAPSTER browser and communication system (provided by Napster Inc.) allowing users to exchange MP3 files (audio files compressed using the MP3 compression format - "MP3" standing for *"Moving Picture Experts Group phase 1, audio layer 3"*) or the GNUTELLA distributed information sharing system (provided by Wego.com, Inc.).

One problem encountered with these systems is that the contents are usually distributed for free by some users to others. The distribution protocols behind these systems do not take into account the right management of copyrighted contents and rely only on the goodwill of users. This results in a high piracy level and in important losses for copyrighted content providers who are left outside these sharing networks and do not receive any income for the distribution of the contents they have created.

In document US-A-6 029 141 there is disclosed an Internet-based software system and method enabling entities called "associates" to market products (e.g. books) that are sold from a merchant Internet site, in return for a commission. However, this system and method does not contain any security feature and may be subject to attacks from hackers (for example to receive commission instead of the "real" associate).

It is therefore an object of the present invention to provide a distributed sharing system in which copyrighted contents are protected against free distribution. Another object of the invention is to propose a secure protocol enabling secure commercial distribution of contents through sharing networks.

Summary of the invention

The invention relates to a system for distributing a digital content to a requester through a sharing network, characterized in that it comprises a central authority ; a responder, registered with said central authority, having means for distributing a data file corresponding to said content to the requester in exchange of a proof of buying received from said requester. The central authority comprises : means for establishing a financial transaction with said requester for the payment by the requester of the content proposed by said responder and for delivering the proof of buying to said requester; and a responder compensation means for providing said responder with a compensation in exchange of the buying of a content by a requester.

The invention also relates to a method for distributing a digital content through a sharing network using the above mentioned system and comprising the steps consisting for a responder in:

a) in response to a request for a digital content received from a requester through said sharing network, sending content purchase information data to said requester ; said content purchase information data including a responder identifier generated by a central authority and data identifying said central authority;
b) receiving from said requester a proof of buying of said digital content, said proof of buying being delivered by said central authority ;
c) providing said requester with a data file corresponding to said digital content; and
d) receiving from said central authority a compensation for the distribution of said digital content.

The invention further relates to a method for distributing a digital content through a sharing network using the above mentioned system and comprising the steps consisting for a requester in:

i) sending through said sharing network a first message to request a digital content;
j) receiving content purchase information data from a responder having a data file corresponding to said content ; said content purchase information data including data identifying a central authority ;
k) in response to a financial transaction with said central authority, receiving a proof of buying of said digital content;
l) sending said proof of buying to said responder; and
m) receiving a data file corresponding to said digital content.

Brief description of the drawings

The various features and advantages of the present invention and its preferred embodiments will now be described with reference to the accompanying drawings which are intended to illustrate and not to limit the scope of the present invention and in which:

Fig. 1 illustrates the principle of an information sharing system.
Fig. 2a to 2c illustrate an example of a sharing network architecture.
Fig. 3 illustrate the preferred protocol for distributing digital content through a sharing network according to the invention.

Description of the preferred embodiments

The present invention is independent of the underlying information sharing system but some mechanisms used by these systems need to be understood before presenting the detailed description of the invention.

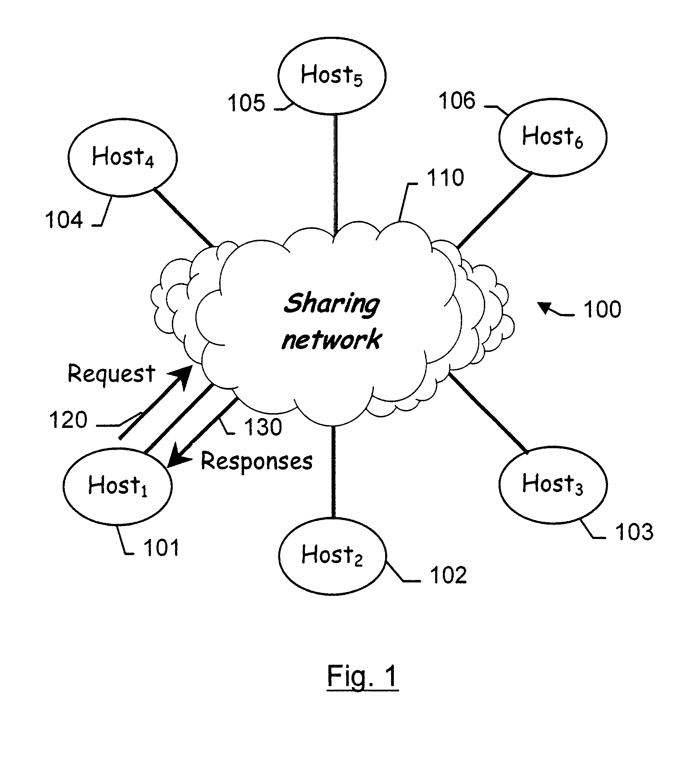

Fig. 1 illustrates an abstract model of an information sharing system 100 in which hosts 101 - 106 are interconnected through a sharing network 110. A host designates both a computer and a specific software which is running on this computer to generate and to handle messages necessary to implement the sharing network. Some users logged on these hosts can propose files containing digital contents for sharing with other users. These files include music files, video files, image files, computer program files, etc.

Once a user, for example logged on $Host_1$ 101, sends a request 120 for a specific digital content on the sharing network 110, all users who are connected to the sharing network and who own files corresponding to this request can respond by sending responses 130. These users are called responders whereas the user who has sent the request is a requester.

Upon receipt of the responses, the requester can choose the files he is interested in and download these files by establishing a peer-to-peer connection between the host on which he is logged on and the host on which the responder is logged on.

Each user connected to the sharing network can be a requester and a responder.

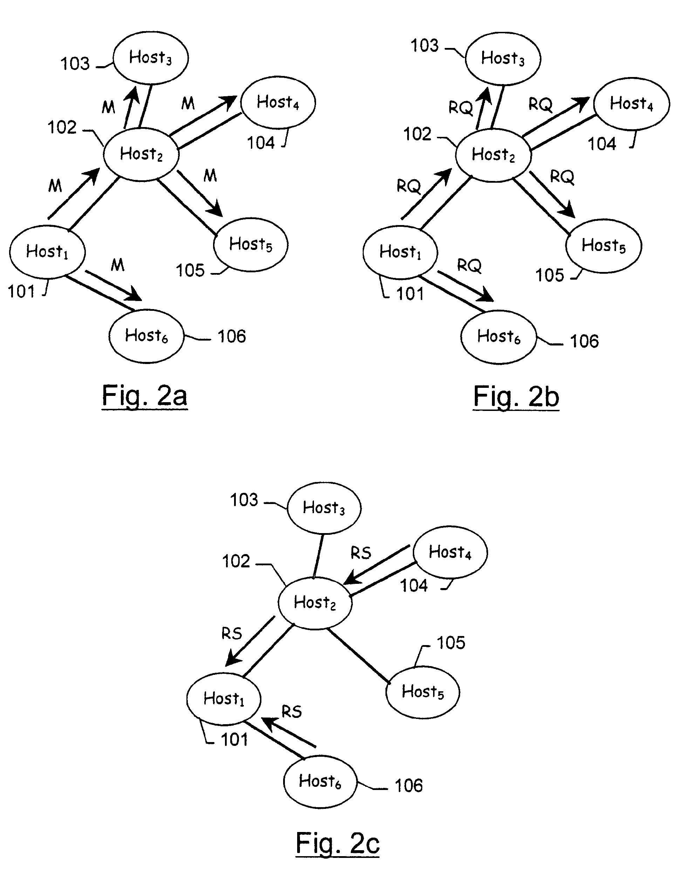

On Fig. 2a to 2c, an example of a sharing network architecture corresponding to the information sharing system of Fig. 1 is presented. In this network, $Host_1$ 101 is connected to $Host_2$ 102 and $Host_6$ 106; $Host_2$ 102 being itself connected to $Host_3$ 103, $Host_4$ 104 and $Host_5$ 105. Each participating host of the system acts both as a client (a program sending a request and waiting for a response) and as a server (a program which respond to a request).

Each host 101 - 106 in the network can send a message to its neighbors in the network. Then, each host which receives a message forwards this message to its neighbors, resulting in a propagation of the message in the network until the message has expired or all the hosts of the network have received the message.

Fig. 2a illustrates such a routing system. In this example, a message M is first sent by $Host_1$ 101 to its peers $Host_2$ 102 and $Host_6$ 106. Then $Host_2$ 102 forwards this message M to its peers 103 - 105. At this moment, all the hosts of the network have received message M.

Fig. 2b and 2c illustrate a request/response mechanism. In Fig. 2b, $Host_1$ 101 submit a request RQ to its peers 102 and 106.The request RQ is forwarded until all the hosts of the network have received it (or until the request has expired). In this example, we suppose that $Host_4$ 104 and $Host_6$ 106 are able to give a response RS to the request RQ. In Fig. 2c, these hosts 104 and 106 send the response RS which is routed in the reverse direction of RQ to $Host_1$ 101. If the request RQ corresponds to a request by a user logged on $Host_1$ for a specific digital content, then the user can choose on which host 104 or 106 which have sent a response RS he will download the file containing the digital content.

We will now present in more details the commercial distributed sharing system of the invention and the secure protocol for distributing digital content in this system.

This system comprises classical actors of a sharing system:

- requesters, who represent users requesting file(s) containing digital content on the sharing network; and
- responders, who represent users who propose files for sharing and who have locally on their computer files requested by requesters.

Of course, as stated above, a same user may act as a requester and as a responder.

Contrary to known sharing systems of the prior art, in the system of the invention, requesters pay for the content they want to receive and responders receive money each time they propose a content to a requester who later buys it.

A new type of actor is therefore added in the sharing system of the invention: the central authorities. These entities are third parties who are responsible for selling contents on behalf of content providers. More specifically, they are responsible for collecting payments from requesters for contents which are sold on the network. They are also responsible for redistributing money both to the responder who distributed the content and to the content provider who created it.

Each central authority works on behalf of one or, preferably, several content providers such as music majors, book editors, software editors, etc. and is responsible for the selling of contents produced by these particular content providers. It is also possible for one content provider to work with several central authorities to sell its contents on the sharing network.

The purchase act is performed between the central authority and a requester who has found an interesting content proposed by a responder on the sharing network. The responder will receive later a compensation for having participated to the distribution of the content.

However, before being able to distribute contents on the sharing network and to receive money from a central authority working on behalf of content providers, all potential responder must be registered with this central authority. If a responder wants to distribute contents (copyrighted files) created by several content providers which do not use the same central authority, the responder must be registered with all the central authorities involved before being able to propose the contents for sharing.

The registration process may be performed in several ways: for example, via e-mail (electronic mail) or via a registration zone on the central authority's Web site. At the end of the registration process, a unique responder identifier is attributed to the responder by the central authority and this responder identifier is sent to the responder and is stored in a database of the central authority.

Once a responder is registered with a central authority, he is authorized to propose on the sharing network contents created by content providers for which the central authority works on behalf of.

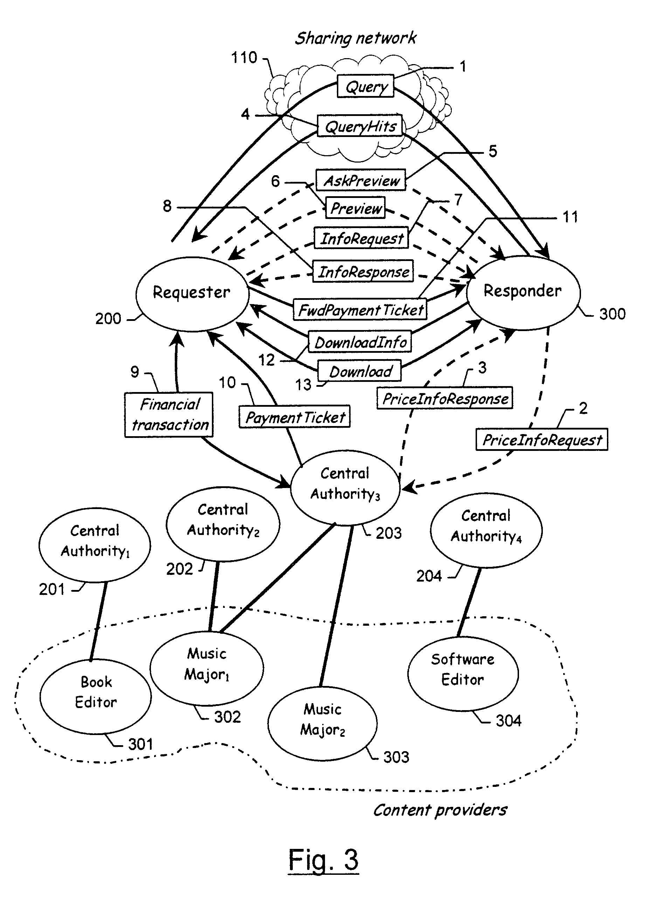

Fig. 3 illustrates the actors involved in the secure protocol of the invention for distributing contents on a sharing network and the messages exchanged during this protocol.

Four different content providers have been represented on Fig. 3: a book editor 301, two music majors : Music Major$_1$ 302 and Music Major$_2$ 303 and a software editor 304.

Four central authorities are also represented on Fig. 3. Central Authority$_1$ 201 is working on behalf of the book editor 301. Central Authority$_2$ 202 is working on behalf of the music major 302 while Central authority$_3$ works for both music majors 302 and 303 and Central Authority$_4$ works for the software editor 304. These links between content providers and central authorities are represented on Fig. 3 by continuous lines.

It should be noted that the number of content providers and the number of central authorities are not linked and that each content provider may work with several central authorities. In the same way, each central authority may work on behalf of several content providers.

In fact the term "central authority" used in the following of the description designates both the entity itself (which may be for example a merchant) and a computer or server of this entity on which a particular software is running to implement the protocol which will be described bellow.

A requester 200 and a responder 300 are also represented on Fig. 3. We suppose that, before sending the first message to search for a specific content, the requester 200 and the responder 300 are both connected to the sharing network 110. The connection mechanism is out of the scope of the present invention and uses the underlying sharing protocol.

The terms "requester" and "responder" as used bellow both designate on the one hand a computer and a software running on this computer forming a host of the sharing network, and on the other hand a natural person who is using this computer either for looking for a digital content on the sharing network (requester), or for proposing his/her files containing digital contents for sharing (responder). Of course, as previously stated, a same natural person and host may be sometimes a requester and sometimes a responder.

Fig. 3 illustrates more particularly the messages exchanged by the actors described above during a search and a purchase of a digital content on the sharing network 110.

In the following description of the protocol for distributing digital content, we suppose that all files (containing protected digital contents) requested by the requester have been produced by Central Authority$_3$ 203 with which the responder is registered. Of course, the responder may distribute files created by several central authorities. In that case, the responder must be registered with all these central authorities and must have a way to retrieve the right central authority according to the requested file.

A possible implementation to create a file containing a protected digital content in a responder's computer will be described bellow.

If we take the example of audio contents, we suppose that the responder has bought a CD (acronym of "Compact Disc") containing several songs, this CD being produced by Music Major$_2$ 303. If the responder wants to share these songs with potential requesters (and to receive compensation for that), he/she will first insert the CD in the CD or DVD (acronym of "Digital Versatile Disc") player of his/her computer. Through the user interface of the sharing network software running on his/her computer, the requester will choose which songs he/she wants to propose for sharing. Then, the central authority working on behalf of Music Major$_2$ 303 (here Central Authority$_3$ 203) will be contacted by the responder for example by entering the URL (acronym of "Uniform Resource Locator" which defines a unique address fully specifying the location of a file or other resource on the Internet) of Central Authority$_3$ 203's Web site (indicated for example in the booklet accompanying the CD) on his/her Web browser.

If the responder has already been registered with Central Authority$_3$ 203, then he/she will indicate the songs he/she wants to distribute on the sharing network and will receive from Central Authority$_3$ 203 the corresponding files (containing the songs in a compressed format for example) comprising an identifier of Central Authority$_3$ 203 and other information such as the price of the song.

If the responder is not registered with Central Authority$_3$ 203, he/she will first have to register with this central authority as explained above before receiving the files corresponding to the songs he/she wants to propose for sharing.

Then, the sharing network software running on the requester's computer will store the files received from Central Authority$_3$ 203 on a particular place of the computer's storage medium.

Referring back to Fig. 3, when a requester 200 sends a query to the sharing network 110 (message *Query* sent at step 1), he/she receives responses when some users connected to the network have files satisfying the requester's query.

In Fig. 3, we suppose that responder 300 has locally a file (or some files) that satisfies the query sent at step 1 by the requester 200. If the file (i.e. the digital content) is available for free, then the classical protocol of the prior art is used. Otherwise, if the file (i.e. the content) is copyright-protected, the responder has locally an information about the price of the file. This price information has been previously delivered by the central authority (here Central Authority$_3$ 203) working on behalf of the content provider which has produced the requested content (here Music Major$_2$ 303).

However, this price information has an expiration date allowing the central authority to change the price of the file over the time. If the price information stored by the responder (or more precisely stored in the storage medium of the responder's computer) has expired, then the responder requests to Central Authority$_3$ 203 a new price information for the particular file requested by the requester 200 by sending a *PriceInfoRequest* message 2.

This *PriceInfoRequest* message 2 which is optional (it is not sent if the price information of the file stored by the responder has not expired) is illustrated in Fig. 3 with a dotted-line arrow as will be illustrated all optional messages which can be sent in the protocol of the invention.

When the central authority 203 receives a *PriceInfoRequest* message 2, it responds by a *PriceInfoResponse* message 3 containing the new price information for the requested file. This message has an expiration date. It should be noted in addition that, preferably, the price information returned by the central authority depends on the identity of the responder. Indeed, some responders can actively participate to the distribution of copyright-protected files and thus can have agreements with central authorities to sell files at lower prices and/or have more interested price margins.

When the responder has a non-expired price information of the file containing a digital content requested in the *Query* message 1, it sends a *QueryHits* message 4 containing information that the requester needs to make his choice and to buy the file. This information includes the file name, the file size, the quality of the file (e.g. a recording mode in case of audio files, version for a software file, etc.), the price, the name of the central authority (or URL) where the file can be bought, the payment protocol accepted by the central authority, the responder identifier (generated by the central authority and given to the responder at the end of the registration process described above).

In a preferred implementation, the sharing network software is running permanently on the responder's computer when the responder is connected to the sharing network 110 and the messages *QueryHits* 4 and/or *PriceInfoRequest* 2 are generated automatically by this software without any intervention of the responder (as natural person).

A requester may receive several *QueryHits* messages from different responders connected to the sharing network. Upon receipt of these responses to his/her query, the requester can make his/her choice. For example, the requester can choose the best price, make a tradeoff between the price and the quality or choose a preferred central authority with which he/she has preferential agreements, etc.

While messages *Query* 1 and *Queryhits* 4 are routed between the requester 200 and the responder 300 through the sharing network 110 (using a routing mechanism which depends on the underlying sharing system), once the requester has chosen one responder, it switches to a point-to-point communication with the responder. A point-to-point communication (also known as "peer-to-peer" communication) consists in exchanging messages between two identified hosts of the sharing network contrary to the mechanism explained with reference to Fig. 2a to 2c.

All other messages, described bellow, exchanged between the requester and the responder, are point-to-point messages.

Furthermore, the requester may optionally ask for a preview of the file by sending a *AskPreview* message 5 to the responder. This feature is particularly interesting in the case of a copyright-protected file: it can be a short time of music in the case of music file, or a demonstration version in the case of a software, or a short clip in the case of video file, etc.

If the requester 200 asked for a preview, the responder 300 responds by a *Preview* message 6 and sends the requester a preview of the requested file.

If the requester 200 decides to buy many files containing copyright-protected content (for example if the query consists in searching all the songs of one singer, then several files may correspond to this query), he can optionally ask for a preferential price by sending an *InfoRequest* message 7 to the responder 300. Upon receipt of this message, the responder 300 requests preferential prices on behalf of the requester 200 by sending a *PriceInfoRequest* message 2 to the central authority 203 and receives a *PriceInfoResponse* message 3 from the central authority 203.

Then, the responder sends to the requester the preferential prices in the *InfoResponse* message 8. If preferential prices have not been accepted by the central authority, this message is empty.

In a preferred embodiment, messages *PriceInfoRequest* 2 and *InfoResponse* 8 are generated automatically by the software running on the requester without any "human" intervention.

If the requester 200 is satisfied with the conditions obtained from the responder 300, he/she is able to make the purchase of the requested file(s) by using the information contained in the *QueryHits 4,* and optionally *InfoReponse* 8, messages. Preferably, the purchase act uses the World Wide Web to get the existing payment infrastructure. The requester 200 contacts the central authority 203 (using the central authority URL contained in the *QueryHits* message 4) and performs a secure Financial transaction 9 with the central authority. During this transaction, the requester sends some data contained in the *QueryHits* message (such as responder identifier). The result of this transaction 9 is the payment of the central authority 203 for the copyright-protected file(s).

The central authority will later be able to pay, on the one hand the content provider and, on the other hand the responder 300 for his/her participation in the distribution of the file(s). Payment of the responder may be made by crediting an account of the responder opened by the central authority during the registration process.

At the end of the financial transaction 9, the central authority 203 delivers a payment ticket (sent in *Payment-Ticket* message 10) to the requester 200 that proves the requester has paid for the file(s). This payment ticket is forwarded to the responder 300 which has distributed the bought file(s) in a message *FwdPaymentTicket* 11. Upon receipt of this message 11, the responder 300 verifies the validity of the payment ticket and, if the verification succeeds, the responder responds by sending to the requester all information needed to download the requested file(s) in a *DownloadInfo* message 12. Then, the requester 200 begins the *Download* operation 13 of the bought file(s).

Given the sensitivity of some data contained in the messages exchanged in the above described protocol, it is necessary to protect these messages against any possible attack during their transmission.

We will now describe in further details the security needs of the system for distributing digital content according to the invention and how they are fulfilled in the preferred embodiment of the invention.

The following notations and acronyms will be used throughout this description :

"," denotes the concatenation operator;

"{M}+" denotes the repetition of message M n times with n>0;

"PBSK" denotes a signature verification public key;

"PRSK" denotes a signature private key;

"SK" denotes a symmetric key;

"MK" denotes a master symmetric key;

"DK" denotes a derived symmetric key;

"SSK" denotes a symmetric session key;

"$E_{SK}$ (M)" denotes the symmetric encryption of message M using the symmetric key SK;

"$S_{PRSK}^{A}$ (M)" denotes the signature of message M using A's signature private key PRSK;

"H (M)" denotes the hash value of message M using hash function H.

Preferably, the following cryptographic algorithms will be used to implement the system and method of the invention :

- "AES" (acronym of "*Advanced Encryption Standard")* will be used for symmetric encryption. More details about the AES standard can be found in the Internet publication "NIST, "*Advanced Encryption Standard Development Effort',* at http://csrc.nist.gov/encryption/aes" and in "DAEMEN J. and RIJMEN V., "The Rijndael Block Cipher', AES Proposal, at http://csrc.nist.gov/encryption/aes/rijndael/Rijndael.pdf".

- "RSA" (acronym of "*Rivest Shamir Adelman*" the names of the creators of this algorithm) with "SHA-1" as hash function will be used as signature algorithm. This algorithm will be used in accordance with the standard PKCS#1 v2.1 described in the following Internet publication: "RSA LABORATORIES, "*PKCS #1 v2.1: RSA Cryptography Standard",* September 1999 (draft status), http://www.rsalabs.com/pkcs/pkcs-1".

- "SHA-1" will be used as hash function *H* (information about SHA-1 function can be found in "*NIST, SIPS PUB 180-1*, *"Secure Hash Standards", Avril 1995'*).

In the preferred implementation of the invention, the size of the cryptographic keys is the following:

- 1024 bits for signature keys;
- 128 bits for symmetric keys.

At first, the system should guarantee to requesters:

a) *Anonymity*: the responder should not know the identity of the requester. He/she should not be able to link several purchases, i.e. to know whether two different purchases are from the same requester or not.

To ensure this anonymity, in a preferred implementation, the identity of the requester is hidden behind its IP address (IP being the acronym of "Internet Protocol"). As in most of cases, this address is dynamically attributed at each Internet connection; therefore the responder is not able to link two different requests.

b) *Security of Payment* the responder should be sure that his/her payment is secure.

This is ensured by the payment protocol itself used in the financial transaction 9 whatever it is, for example SET (acronym of *"Secure Electronic Transaction",* information about which can be found in "Loeb L., *"Secure Electronic Transactions: Introduction and Technical* Reference", Artech House Publishers, 1998") or SSL (acronym of *"Secure Socket Layer',* a well-known payment protocol used on the Internet) or a micropayment protocol.

c) *Proof of buying:* the responder should be sure that the proof of buying he/she gets (i.e. the payment ticket received in message 10) from the central authority is valid and will always allow him/her to get the file he/she bought. Nobody else than him/her may use that proof of buying. In addition, the responder should have the ability to verify that proof which should also be checkable by the responder.

In a preferred embodiment, the proof of buying, i.e. the payment ticket, is signed by the central authority (using a signature private key $PRSK_{CA}$ as further explained bellow) before being transmitted to the requester to prove its validity. This signed payment ticket preferably includes information on the bought content and the identity of the responder (i.e. the responder identifier which has been received by the requester in the *QueryHits* message 4).

In addition, in order not to be used by a hacker who may intercept the *PaymentTicket* message 10, the latter (in fact the signed payment ticket) is further encrypted by the central authority before being transmitted to the requester. It is encrypted using a key $K_{PAY}$ that has already been used (or generated) in the payment protocol used during the financial transaction 9 and which is shared by the requester and the central authority. For example SET and SSL protocols define such keys.

Moreover, in order to secure the transmission of the payment ticket between the requester and the responder in the *FwdPaymentTicket* message 11, a symmetric session key SSK is used to create an encrypted channel between the requester and the responder for the transmission of the *FwdPaymentTicket* message 11. The way this key SSK is generated by the central authority and shared by both the requester and the responder will be further detailed bellow.

The system should further guarantee to responders:

a) *Privacy*: nobody else than the relevant responder may obtain information (prices, reductions... which may be different for each responder) on commercial agreements made with a central authority.

To ensure this privacy, in a preferred implementation the *PriceInfoResponse* message 3 is encrypted by the central authority before its transmission to the responder in such a way that only the right responder is able to decrypt it. Preferably, it is encrypted using a symmetric encryption key $DK_{PR}$ which is generated by the central authority during the responder's registration process and which is derived from a master key $MK_{PR}$ (only known by the central authority) and from the responder identifier. This key $DK_{PR}$, which is different for each responder, is sent by the central authority to the responder at the end of the registration process together with the responder identifier. If a responder tries to know the price conditions of one concurrent, he will receive them encrypted and will not be able to decrypt them.

b) *Rightness of pricing:* the responder should be sure that the price information received from a central authority in the *PriceInfoResponse* message 3 is valid and will thus be further accepted by this authority.

In a preferred embodiment, the price information is signed by the central authority (using the signature private key $PRSK_{CA}$) before being transmitted to the responder in the *PriceInfoResponse* message 3. Preferably, the signed price information contains some information on the file proposed for sharing, the price, the time limit of the price validity, the responder identifier, some information about the quality of the file, the modes of payment accepted by the central authority and the central authority URL.

c) *Assurance of payment*: nobody else than the relevant responder should obtain payment from a central authority.

This is ensured in the preferred implementation by the presentation of the proof of buying (i.e. payment ticket) to the responder (in the *FwdPaymentTicket* message 11), since the responder identifier is included in that proof which is generated by the central authority.

d) *Confidentiality*: the download information transmitted to the requester in the *DownloadInfo* message 12 and the content to be downloaded during *Download* operation 13 are to be kept confidential during their transmission to the requester.

This is ensured in the preferred embodiment by the presence of an encrypted channel between the responder and the requester, this encrypted channel being created thanks to a symmetric session key SSK as it will be further described bellow.

e) *Restriction to the purchase:* it should be ensured that the requester may get nothing from the responder but the content he bought.

In a preferred implementation, the responder's computer has a permanent directory where all the contents (i. e. all the files received from central authorities when the responder has acquired the right to distribute the contents on the sharing network) are available in an encrypted form (each content being encrypted with its proper key $K_{content}$). Then, the responder transmits the decryption key $K_{content}$ of the bought content (via the encrypted channel) to the requester in the *DownloadInfo* message 12 and the content itself is transmitted in its encrypted form (using key $K_{content}$) to the requester in the *Download* operation 13. Integrity of the content may be obtained by including in the encrypted content transmitted the hash value of the content.

An alternative solution would be for the responder to dynamically create a directory in which the bought files are placed. This directory would be destroyed after the *Download* operation 13 occurs. The content will have to be encrypted on the fly by the responder to be sent, through the encrypted channel, to the requester.

Finally, the system should ensure to central authorities the validity of payment (i.e. the fact that the payment they receive is valid). This is ensured by the payment protocol used in the *Financial transaction 9.*

In order to implement the preferred embodiments that have been described to ensure security in the protocol of the invention, several cryptographic keys need to be generated and shared by the actors of the system as it will be described bellow.

At first each central authority has a signature private key $PRSK_{CA}$ which is used to certify the prices and the payments. The associated signature verification public key $PBSK_{CA}$ will need to be certified. In a preferred solution, we propose to use cross-certification between the different central authorities which avoids building a heavy Public Key Infrastructure. The requester will then have to trust at least one central authority.

Moreover, each central authority has also two master symmetric keys $MK_{PR}$ (to protect the transmission of the price information in the *PriceInfoResponse* message 3) and $MK_{EC}$ (to build an encrypted channel between the responder and the requester). Central authorities will distribute to each responder at its registration, in addition to its responder identifier, two derived keys :

$DK_{PR} = E_{MK_{PR}}$ (*responder identifier*); and
$DK_{EC} = E_{MK_{EC}}$ (*responder identifier*).

As for the responders, they need to get at their registration the two derived keys $DK_{PR}$ and $DK_{EC}$. They also have to create a symmetric key $K_{content}$ for each content they will distribute through the sharing network. Each content will be stored in a specific directory of the responder in the following form:

$E_{K_{content}}$ (*content, H (content))*.

Regarding requesters, they do not need any dedicated key beforehand. However, they will use a key $K_{PAY}$ that is used and / or built in the payment protocol used in the financial transaction 9. This key $K_{PAY}$ is used to encrypt the payment ticket transmitted between the central authority and the requester in message *PaymentTicket* 10.

Finally, one symmetric session key SSK is created at each purchase of a content. This key SSK will be used to create an encrypted channel between the requester and the responder. The key SSK is created by the central authority after the financial transaction 9 (during when the responder identifier has been transmitted to it). The central authority first generates a random value R. Then, it calculates $SSK=E_{DK_{EC}}$ (R). The key $DK_{EC}$ is reconstructed by the central authority from the master key $MK_{EC}$ and the responder identifier:

$DK_{EC} = E_{MK_{EC}}$ (*responder identifier).*

The session key SSK is transmitted, together with the random value R, to the requester in the *PaymentTicket* message 10 (encrypted with key $K_{PAY}$). Then, the requester sends the random value R to the responder which is able to calculate $SSK= E_{DK_{EC}}$ (R) with its key $DK_{EC}$. Finally, both the requester and the responder share the same session key SSK and can therefore built an encrypted channel.

In the following part of the description, we will propose a more detailed description of the internal content of the messages 1-13 exchanged in the protocol illustrated in Fig. 3. This description is of course a possible implementation and should not be understood as limiting the scope of the invention.

**1. *Query* message 1:**

This message is sent by a requester to search for specific file(s) in the sharing network 110. For this purpose, the requester types a search criterion describing the requested file(s). For example, a *"britneyspears\*.mp3"* search criterion may indicate that the requester is looking for all shared MP3 files for which the artist is "Britney Spears".
The detailed message format is presented in Table 1 bellow:

Table 1

| Fields of message | Description of the fields |
|---|---|
| Query message data | *{Minimum speed, Search criteria}* |
| *Minimum speed* (2 bytes) | Minimum speed (in KB/second) of hosts that should respond to this message with a *QueryHit* message. |
| *Search Criteria* (variable length) | Null-terminated search string. |

**2. *PriceInfoRequest* message 2:**

This message is sent by a responder to a central authority to request purchase information (price, payment schemes accepted by the central authority, etc.) for copyrighted files proposed by the responder for sharing. In practice, the responder has locally purchase information for all of his copyrighted-shared files. However, this information has an expiration date and must therefore be refreshed on a regular basis.
This message can be sent at different times during the procedure:

- at first, it can be sent by the responder before he proposes copyrighted files for sharing. In that case, the responder uses this message to have an initial purchase information;
- secondly, it can be sent after the responder has received an *InfoRequest* message 7 from the requester. The *InfoRequest* message 7 is used by a requester to have preferential prices in some situations (for example when the requester decides to buy many files);
- it can also be sent each time a responder detects that some local purchase information has expired.

This *PriceInfoRequest* message 2 also contains information about the responder identity. Indeed, the responder can negotiate in an out of band way with central authorities his price margins and/or preferential prices proposed to the requesters. Therefore, the presence of the responder identity in this message allows the central authority to propose the right prices according to the responder.
The detailed message format is presented in Table 2 bellow:

Table 2

| Fields of message | Description of the fields |
|---|---|
| *PriceInfoRequest* message data | *{ResponderID, ReqPurchaseNumber, {ReqPurchaseInfo}+}* |
| *ResponderID* (32 bytes) | Responder identifier generated by the central authority during the responder registration. |
| *ReqPriceNumber* (1 byte) | Number of requested purchase information. |
| *ReqPurchaseInfo* | *{FileIndex, FileSize, FileName, Quality}* |
| *FileIndex* (4 bytes) | Unique identifier representing the file for which the responder requests price information. |
| *FileSize* (4 bytes) | Size (in bytes) of the file indexed by *FileIndex.* |

Table 2   (continued)

| Fields of message | Description of the fields |
|---|---|
| **PriceInfoRequest message data** | **{ResponderID, ReqPurchaseNumber, {ReqPurchaseInfo}+}** |
| **FileName** (variable length) | Double-null terminated string representing the name of the local file indexed by *FileIndex.* |
| **Quality** (variable length) | Double-null terminated string representing a quality measure of the file indexed by *FileIndex.* |

It should be noted that:

- the *ReqPurchaseInfo* field appears *ReqPurchaseNumber* times in the *PriceInfoRequest* message 2 (one for each file for which the responder needs purchase information);
- the set (*FileIndex*, *FileSize*, *FileName*, *Quality*) must uniquely identify a same file at the responder side and at the central authority side. This ensures that the central authority is able to give the right price to the responder. For this purpose, *FileIndex* can use a mechanism similar to ISBN for books numbering ("ISBN" is the acronym of "*International Standard Book Number*").

### 3. PriceInfoResponse message 3:

This message is sent by the central authority to the responder and contains purchase information requested by the responder in the *PriceInfoRequest* message 2. This purchase information includes all information needed by a requester to choose a file to download once he has sent a query and he has received responses from responders. All proposed purchase information has an expiration date and once this information is received by the responder, it must be stored by the responder until this date.

As previously stated, this message should be confidential. The data it contains are therefore encrypted with the symmetric key $DK_{PR}$ before being sent to the responder.

The detailed message format is presented in Table 3 bellow:

Table 3

| Fields of message | Description of the fields |
|---|---|
| **PriceInfoResponse message data** | **{EncryptedPriceInfoResponse}** |
| **EncryptedPriceInfoResponse** | $E_{DK_{PR}}$ **{PurchaseInfoNumber,{SignedPurchaseI nfo}+)** |
| **PurchaseInfoNumber** (1 byte) | Number of purchase information contained in the message. |
| **SignedPurchaseInfo** | $S_{PRSK}^{CA}$ (**PurchaseInfo**) |
| **PurchaseInfo** | **{FileIndex, FileSize, FileName, Quality, Price, PriceValidity, MerchantName, PaymentMode, CA_URL, ResponderID}** |
| **FileIndex** (4 bytes) | Unique file identifier. This field is extracted from the *PriceInfoRequest* message 2. |
| **FileSize** (4 bytes) | Size (in bytes) of the file indexed by *FileIndex.* This field is extracted from the *PriceInfoRequest* message 2. |
| **FileName** (variable length) | Double-null terminated string representing the name of the local file indexed by *FileIndex.* This field is extracted from the *PriceInfoRequest* message 2. |
| **Quality** (variable length) | Double-null terminated string representing a quality measure of the file indexed by *FileIndex.* This field is extracted from the *PriceInfoRequest* message 2. |

Table 3   (continued)

| Fields of message | Description of the fields |
|---|---|
| **PriceInfoResponse** message data | **{EncryptedPriceInfoResponse}** |
| **Price** (variable length) | Double-null terminated string indicating the price of the file indexed by *FileIndex.* This field is formed by three sub-fields separated each other by null character: *"Currency", "Amount", "AmtExp10". Currency* specifies the three-digit ISO 4217 currency code. Amount represents the amount of payment. *AmtExp10* represents an exponent base 10 such that amount*$(10^{amtExp10})$ shall be the value in the minor unit of the currency specified in ISO 4217. |
| **PriceValidity** (variable length) | Double-null terminated string indicating the time during which the proposed price is valid for the file indexed by *FileIndex.* After this time, the responder will have to request new purchase information. |
| **MerchantName** (variable length) | Double-null terminated string representing a human readable name of the central authority responsible for the selling of the file indexed by *FileIndex.* |
| **PaymentMode** (variable length) | Double-null terminated string representing the payment schemes acceptable by the central authority for the purchase of the corresponding file. The schemes are separated from each other's by a null character. |
| **CA_URL** (variable length) | Double-null terminated string indicating the URL of the central authority that will sell the file indexed by *FileIndex* to requesters. A payment server accepting the payment protocols indicated in the *PaymentMode* field must run at this URL. |
| **ResponderID** (variable length) | Unique identifier generated by the central authority during the registration of the responder that emitted the *PriceInfoRequest* message 2. This field is extracted from the *PriceInfoRequest* message. |

**4. *QueryHits* message 4:**

This message is sent by a responder in response to a *Query* message 1 received from a requester. If a responder has locally files that correspond to the requester's query, the responder responds by a *QueryHits* message 4. This message should contain all data needed by the requester to make his/her choice.

This choice can be made on several bases:

- the price: the requester should know the price of copyrighted files;
- the price/quality tradeoff: the requester should know the quality for the proposed files. Therefore, a quality measure has to be proposed by the commercial distributed sharing system;
- the accepted payment systems: the requester should know if he is able to pay the requested files with the proposed payment schemes;
- the merchant name (i.e. central authority name): the requester may have preferential relationships with some merchants.

All these data have been originally generated by the central authority, which is responsible for the selling of the corresponding files. Therefore, most part of this message is extracted from the *PriceInfoResponse* message 2.

Moreover, this message proposes an optional field representing the personal responder's Web site URL allowing the requester to get personal information on the responder. This field can be useful in the case where the requester detects that the responder has many interesting files. By giving his/her Web site address, the responder provides the requester with a way to access value-added services such as complete file catalogue, e-mail service, chat, etc.

The detailed message format is presented in Table 4 bellow:

Table 4

| Fields of message | Description of the fields |
|---|---|
| *QueryHits* message data | *{HitNumber, PortNumber, IPAddress, Speed, [ResponderURL], {SignedPurchaseInfo}+}* |
| *HitNumber* (1 byte) | Number of shared files proposed by the responder that satisfy the requester's query. |
| *PortNumber* (2 bytes) | Transport-layer port number that the requester must use if he decides to use this responder as the file seller. |
| *IP Address* (4 bytes) | Responder's IP address that the requester must use if he decides to use this responder as the file seller. |
| *Speed* (4 bytes) | Speed (in KB/second) of the responder. |
| *ResponderURL* (variable length) | Double-null terminated string that indicates the address of the responder's personal Web site. This field is optional and can be used by the requester to find responder's personal information and other value-added services (chat, e-mail, etc.). |
| *SignedPurchaseInfo* | This field contains all information about the files proposed by the responder for sharing and that satisfy the requester's query. This field has been generated and signed by the central authority to build the *PriceInfoResponse* message 3 and is extracted from this message. |

It should be noted that:

- the *SignedPurchaseInfo* field appears *HitNumber* times in the *QueryHits* message 4 (one for each file satisfying the requester's request);
- the prices given by the responder in this message are imposed by the central authority working for the content providers which have produced the corresponding contents. These prices are known by the responder thanks to the *PriceInfoRequest*/*PriceInfoResponse* messages pair.

**5. *AskPreview* message 5:**

This optional message is sent by the requester to ask for a preview of a specific file. This message is sent once the requester has received a *QueryHits* message 4. By choosing a specific file in the list of responders' propositions, the requester can receive a preview of the file by sending this message.

It should be noted that this message is a point-to-point message and thus does not traverse the sharing network 110. For this purpose, it uses the *IPAddress* and *PortNumber* fields received from the responder in the *QueryHits* message 4.

The detailed message format is presented in Table 5 bellow:

Table 5

| Fields of message | Description of the fields |
|---|---|
| *AskPreview* message data | *{FileIndex, FileSize, FileName, Quality}* |
| *FileIndex* (4 bytes) | Unique file identifier. This field is extracted from the *Query Hits* message 4. |
| *FileSize* (4 bytes) | Size (in bytes) of the file indexed by *FileIndex.* This field is extracted from the *QueryHits* message 4. |
| *FileName* (variable length) | Double-null terminated string representing the name of the local file indexed by *FileIndex.* This field is extracted from the *QueryHits* message 4. |
| *Quality* (variable length) | Double-null terminated string representing a quality measure of the file indexed by *FileIndex.* This field is extracted from the *QueryHist* message 4. |

*6. Preview* **message 6:**

This message is used by the responder to send a preview requested by the requester in the *AskPreview* message 5. The sent preview is not interpreted by the requester's client software but locally stored for being later played by the adequate player.

The detailed message format is presented in Table 6 bellow:

Table 6

| Fields of message | Description of the fields |
|---|---|
| *Preview* **message data** | **{*FileIndex, FileSize, FileName, BitStream*}** |
| *FileIndex* (4 bytes) | Unique file identifier. This field is extracted from the *AskPreview* message 5. |
| *FileSize* (4 bytes) | Size (in bytes) of the file indexed by *FileIndex.* This field is extracted from the *AskPreview* message 5. |
| *FileName* (variable length) | Double-null terminated string representing the name of the local file indexed by *FileIndex.* This field is extracted from the *AskPreview* message 5. |
| *BitStream* (variable length) | BitStream representing the preview requested by the requester in the *AskPreview* message 5. |

*7. InfoRequest* **message 7:**

This message is optional and is used by the requester to receive preferential prices for a set of files chosen from a previously received *QueryHits* message 4. This message is typically used when a requester wants to buy many files that can justify such preferential prices. Upon receipt of this message, the responder will send a new *PriceInfoRequest* message 2 to the central authority in order to get fresh price information.

Contrary to *Query* and *QueryHits* messages 1 and 2, this message is directly sent, through a point-to-point connection, to the responder by using the *IPAddress* and *PortNumber* fields contained in the *QueryHits* message 4. Therefore, this message is not routed through the sharing network 110.

The detailed message format is presented in Table 7 bellow:

Table 7

| Fields of message | Description of the fields |
|---|---|
| *InfoRequest* **message data** | **{*ReqInfoNumber*, {*ReqFileInfo*}+}** |
| *ReqInfoNumber* (1 byte) | Number of shared files proposed by the responder and for which the requester wants to get purchase information. |
| *ReqFileInfo* | **{*FileIndex, FileSize, FileName, Quality*}** |
| *FileIndex* (4 bytes) | File index used to uniquely identify the file for which the requester asks purchase information. This field is extracted from the *QueryHits* message 4. |
| *FileSize* (4 bytes) | Size (in bytes) of the file indexed by *FileIndex* and for which the requester asks purchase information. This field is extracted from the *QueryHits* message 4. |
| *FileName* (variable length) | Double-null terminated string representing the name of the local file indexed by *FileIndex* and for which the requester asks purchase information. This field is extracted from the *QueryHits* message 4. |
| *Quality* (variable length) | Double-null terminated string representing a quality measure of the file indexed by *FileIndex* and for which the requester asks purchase information. This field is extracted from the *QueryHits* message 4. |

It should be noted that the *ReqFileInfo* field appears *ReqInfoNumber* times in the *InfoRequest* message 7 (one for each file for which the requester needs purchase information).

**8. *InfoResponse* message 8:**

This message contains all purchase information requested by the requester in the *InfoRequest* message 7. Moreover, this message proposes an optional field representing the personal responder's Web site URL allowing the requester to get personal information on the responder. This field can be useful in the case where the requester detects that the responder has many interesting files. By giving his Web site address, the responder provides the requester with a way to access value-added services such as complete file catalogue, e-mail service, chat, etc.

As the *InfoRequest* message 7, this message does not traverse the sharing network 110 but is directly sent to the requester.

The detailed message format is presented in Table 8 bellow:

Table 8

| Fields of message | Description of the fields |
|---|---|
| ***InfoResponse* message data** | **{[*ResponderURL*], *PurchaseInfoNumber*, {*SignedPurchaseInfo*}+}** |
| ***ResponderURL*** (variable ***ResponderURL*** (variable length) | If present, this field indicates the responder's Web site address at which the requester can fin value-added services. |
| ***PurchaseInfoNumber*** (1 byte) | Number of purchase information contained in this message. |
| ***SignedPurchaseInfo*** | This field is the same as the one generated in the *PriceInfoResponse* message 3 and contains all price information requested by the requester |

It should be noted that:

- the *SignedPurchaseInfo* field appears *PurchaseInfoNumber* times in the *InfoResponse* message 8 (one for each file for which the requester needs purchase information);
- theoretically (in the best case), the *PurchaseInfoNumber* field has the same value as the *ReqInfoNumber* field of the *InfoRequest* message 7. However, in some malfunction cases (central authority shutdown, database crashing, etc.), the responder may be unable to send purchase information about some files. In this case, we have *PurchaseInfoNumber< ReqInfoNumber*,
- upon receipt of this message 8, the requester should verify that the received information matches the one he requested. If the verification fails, an adapted behavior should be taken by the requester. A reasonable behavior would consist to skip all purchase information that do not match.

**9. Financial transaction 9:**

This section does not cover a special message but a suite of messages resulting in the payment of the central authority by the requester for the requested files. The payment phase is out of the scope of the invention and can be implemented by any payment protocol (e.g. SET, SSL, micropayment, etc.) supported by the central authority (i.e. those which have been sent in the *QueryHits* and *InfoResponse* messages 4 and 8).

However, the payment phase should be preceded by a negotiation phase in which the requester presents an order form and the payment scheme he/she chooses among the list of accepted payment protocols. This information is extracted from the *InfoResponse* or *QueryHits* messages previously received by the requester.

Table 9 bellow presents the *Negotiation* message sent by the requester to the central authority:

Table 9

| Fields of message | Description of the fields |
|---|---|
| ***Negotiation* message data** | **{*FileNumber*, *ChosenPaymentMode*, {*SignedPurchaseInfo*}+}** |
| ***FileNumber*** (1 byte) | Number of files that the user wants to buy to this central authority. |

Table 9   (continued)

| Fields of message | Description of the fields |
|---|---|
| *Negotiation* message data | *{FileNumber, ChosenPaymentMode, {SignedPurchaseInfo}+}* |
| *ChosenPaymentMode* (variable length) | Double-null terminated string representing the payment scheme chosen by the requester to pay the corresponding file. This field must belong to the *PaymentMode* sub-field of the *SignedPurchaseInfo* field of the *QueryHits* message 4. |
| *SignedPurchaseInfo* (variable length) | Data set representing a file that the requester wants to buy. This set is retrieved from the *QueryHits* message 4 or the *InfoResponse* message 8 and has been originally generated and signed by the central authority contacted by the requester for the purchase. |

It should be noted that:

- the *SignedPurchaseInfo* field appears *FileNumber* times in the *Negotiation* message (one for each file that the requester wants to buy);
- Before launching the financial transaction, the central authority verifies the validity of the presented price information and the responder identifier contained in the *SignedPurchaseInfo* field. If the verification fails, the transaction is cancelled.

**10. *PaymentTicket* message 10:**

This message is delivered by the central authority to the requester once the financial transaction is completed.
The detailed message format is presented in Table 10 bellow:

Table 10

| Fields of message | Description of the fields |
|---|---|
| *PaymentTicket* message data | *{EncryptedPaymentTicket}* |
| *EncryptedPaymentTicket* | $E_{K_{PAY}}$ (*SignedPaymentTicket, Challenge, SSK*) |
| *SignedPaymentTicket* | $S^{CA}_{PRSK}$ (*ResponderID, TransactionNumber, {TransactionInfo}+*) |
| *ResponderID* (32 bytes) | Responder identifier used by the central authority during the purchase of the corresponding files. |
| *TransactionNumber* (1 byte) | Number of files that the requester has paid. |
| *TransactionInfo* | *{FileIndex, FileSize, FileName, Quality}* |
| *FileIndex* (4 bytes) | Unique file identifier representing the corresponding file paid by the requester. |
| *FileSize* (4 bytes) | Size (in bytes) of the file indexed by *FileIndex.* |
| *FileName* (variable length) | Double-null terminated string representing the name of the local file indexed by *FileIndex.* |
| *Quality* (variable length) | Double-null terminated string representing a quality measure of the file indexed by *FileIndex.* |
| *Challenge* (16 bytes) | Random value generated by the central authority to derive the session key *SSK.* |
| *SSK* (16 bytes) | Session key to be shared between the requester and the responder: SSK=$E_{DK_{EC}}$ *(Challenge).* |

It should be noted that the *TransactionInfo* field appears *TransactionNumber* times in the *PaymentTicket* message 10 (one for each file that the requester paid).

**11. *FwdPaymentTicket* message 11:**

This message is sent by the requester to the responder to prove that he/she has bought some copyright-protected files. This message contains about the same data than the *PaymentTicket* message 10.

The detailed message format is presented in Table 11 bellow:

Table 11

| Fields of message | Description of the fields |
|---|---|
| ***FwdPaymentTicket* message data** | ***{EncryptedFwdPaymentTicket}*** |
| ***EncryptedFwdPaymentTicket*** | E$_{SSK}$ (***SignedPaymentTicket***), ***Challenge*** |
| ***SignedPaymentTicket*** (variable length) | *SignedPaymentTicket* field that was generated by the central authority as a proof of buying and which is extracted from the *PaymentTicket* message 10. |
| ***Challenge*** (16 bytes) | *Challenge* generated by the central authority and which is extracted from the *PaymentTicket* message 10. It will be used by the responder to calculate the session key SSK. |

**12. *DownloadInfo* message 12:**

This message is sent by the responder to the requester once he received the *FwdPaymentTicket* message 11 proving that the requester paid some files. In this message, the responder gives the URL at which the requester can ask the download of the bought files. For facility purpose, we propose to use the HTTP protocol for the download phase. Therefore, an HTTP server should run at the URL contained in the *DownloadInfo* message 12.

Moreover, in order to secure the download phase against eavesdropping, the downloaded files will be encrypted. The *DownloadInfo* message 12 therefore also contains the decryption key that will be used by the requester to retrieve the original bought files.

In addition, this feature prevents the requester to download files other than those he bought.

The detailed message format is presented in Table 12 bellow:

Table 12

| Fields of message | Description of the fields |
|---|---|
| ***DownloadInfo* message data** | ***{EncryptedDownloadInfo}*** |
| ***EncryptedDownloadInfo*** | E$_{SSK}$ (***{FileDownloadInfo}+***, ***DownloadURL***) |
| ***FileDownloadInfo*** | ***{FileName, ContentKey}*** |
| *FileName* (variable length) | Null-terminated string representing the name of the file to be downloaded. |
| ***ContentKey*** (16 bytes) | Decryption key of the relevant file (K$_{content}$) |
| ***DownloadURL*** (variable length) | Null-terminated string representing the URL at which the requester can download the bought files. |

It should be noted that upon receipt of this message, the requester should verify that the number of received downloaded information correspond to the number of bought files.

**13. *Download* operation 13:**

Once the requester receives the *DownloadInfo* message 12, he/she can begin the download phase 13.

Table 13 bellow illustrates the content format downloaded by the requester. As underlined previously, this content is encrypted preventing thus eavesdropping.

Table 13

| Fields of message | Description of the fields |
|---|---|
| **ContentDownload** format | **{EncryptedContent}** |
| **EncryptedContent** | $E_{K_{content}}$ (**CheckableContent**) |
| **CheckableContent** | **{HashedContent, Content}** |
| **HashedContent** (20 bytes) | Hash value of the *Content* field. This will be used to check that the content has been downloaded without any transmission problem. |
| **Content** (variable length) | Bought bitstream. |

We will now describe the preferred method to provide responders with their compensation for the distribution of digital content through the sharing network. Indeed, each time a content which has been distributed by a responder is bought by a requester, the responder should receive a corresponding payment from the central authority.

As previously stated, all responders who distribute digital contents through the sharing network must be registered with at least one central authority in order to receive compensation for this distribution. A same responder can be registered with several central authorities if he/she proposes copyrighted contents created by different content providers which are not linked to the same central authority.

In the preferred method for paying responders, it is proposed to create an account for each responder during the registration phase, this account being linked to the responder identifier. During the registration, the responder gives to the central authority all personal data (name, address, bank account number, etc.) needed by the central authority to perform account clearing. Then, on a regular basis, the central authority with which the responder is registered performs an account clearing resulting in the payment of the responder. The clearing method should be negotiated between the central authority and the responder during the registration phase, and is out of scope of the invention.

During the purchase of a copyrighted content, the central authority credits the responder's account once it receives the *Negotiation* message of the financial transaction 9. As underlined in section 9 above, this message contains the responder identifier, which has been delivered by the central authority. The central authority has thus all needed data to pay the responder.

An alternative solution would consist for the responder to present the *PaymentTicket* message data received from the requesters (in *FwdPaymentTicket* messages 11) to the central authority for being paid. Once the responder receives *PaymentTicket* message data, he/she stores it as a proof of selling. On the other side, the central authorities store all generated *PaymentTicket* messages. Then, the responder presents these messages to each central authority, which can verify the validity of the message before performing an online financial transaction with the responder.

**Claims**

1. System for distributing a digital content to a requester (200) through a sharing network (110), **characterized in that** it comprises:

   a central authority (201 - 204) ;
   a responder (300), registered with said central authority, having means for distributing a data file corresponding to said content to said requester (200) in exchange of a proof of buying (11) received from said requester;

   wherein said central authority comprises :

   - means for establishing a financial transaction (9) with said requester for the payment by the requester of the content proposed by said responder and for delivering the proof of buying (10) to said requester; and
   - a responder compensation means for providing said responder with a compensation in exchange of the buying of a content by a requester.

2. Method for distributing a digital content through a sharing network (110) using the system according to claim 1, **characterized in that** it comprises the steps consisting for a responder (300) in:

   a) in response to a request (1) for a digital content received from a requester (200) through said sharing network, sending content purchase information data (4) to said requester ;

said content purchase information data including a responder identifier generated by a central authority (201 - 204) and data identifying said central authority ;

b) receiving from said requester (200) a proof of buying (11) of said digital content, said proof of buying being delivered by said central authority ;

c) providing said requester (200) with a data file corresponding to said digital content; and

d) receiving from said central authority a compensation for the distribution of said digital content.

**3.** Method according to claim 2, further comprising before step a) a registration step comprising:

receiving from said central authority a responder identifier.

**4.** Method according to claim 3, wherein said registration step further comprises:

receiving from said central authority a first symmetric encryption key ($DK_{PR}$) derived from a first central authority master key ($MK_{PR}$) and from said responder identifier.

**5.** Method according to claim 4, wherein said registration step further comprises:

receiving from said central authority a second symmetric encryption key ($DK_{EC}$) derived from a second central authority master key ($MK_{EC}$) and from said responder identifier.

**6.** Method for distributing a digital content through a sharing network (110) using the system according to claim 1, **characterized in that** it comprises the steps consisting for a requester (200) in:

i) sending through said sharing network a first message (1) to request a digital content ;

j) receiving content purchase information data (4) from a responder having a data file corresponding to said content;

said content purchase information data including data identifying a central authority;

k) in response to a financial transaction (9) with said central authority, receiving a proof of buying (10) of said digital content;

l) sending said proof of buying to said responder (300); and

m) receiving a data file corresponding to said digital content.

**7.** Method according to claims 2 or 6, wherein said content purchase information data comprises content price data (3) received by said responder from said central authority, said content price data being determined by the central authority for each responder.

**8.** Method according to claim 7, wherein said content purchase information data further comprises a price time validity data.

**9.** Method according to claim 4, wherein said content purchase information data comprises content price data (3) received by said responder from said central authority, said content price data being determined by the central authority for each responder,

and wherein said content price data are sent in a message (3) encrypted using said first symmetric encryption key ($DK_{PR}$).

**10.** Method according to claim 5, wherein said proof of buying is sent in a message (11) encrypted using a symmetric session key (SSK),

said symmetric session key (SSK) being derived by the central authority from a random value and from said second symmetric encryption key ($DK_{EC}$),

said random value being sent in clear in the message (11) containing said encrypted proof of buying.

Fig. 1

Fig. 2a

Fig. 2b

Fig. 2c

Fig. 3

# EP 1 220 173 A1

**European Patent Office**

## EUROPEAN SEARCH REPORT

Application Number

EP 00 40 3721

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | EP 0 809 221 A (SUN MICROSYSTEMS INC) 26 November 1997 (1997-11-26) | 1,2,6 | G07F17/16 G06F1/00 |
| Y | * column 6, line 37 – column 7, line 40 * | 4,5 | |
| A | * column 11, line 47 – column 12, line 10; claims 1,4-6; figures 1,3B,10 * | 7 | |
| Y | WO 00 62265 A (LIQUID AUDIO INC) 19 October 2000 (2000-10-19) | 4,5 | |
| A | * page 12, line 5 – line 19 * * abstract; figures 1,2 * | 1,2,6,9 | |
| A | WO 99 13398 A (FAULT LINE TECHNOLOGY INC ;PETERSON HAROLD L (US); WILLIAMS JAMES) 18 March 1999 (1999-03-18) * page 9, line 25 – page 10, line 6; figure 2B * | 1,2,6 | |
| A | EP 0 993 163 A (BACKWEB TECHNOLOGIES LTD) 12 April 2000 (2000-04-12) * paragraph '0005! – paragraph '0009!; claims 1,11; figures 1A,1B * | 1,2,6 | |
| | | | **TECHNICAL FIELDS SEARCHED** (Int.Cl.7) |
| A | US 5 337 357 A (CHOU WAYNE W  ET AL) 9 August 1994 (1994-08-09) * claim 1; figure 1 * | 10 | G06F G07F |
| A | MARC A KAPLAN:  "IBM Cryptolopes, SuperDistribution and Digital Rights Management" IBM RESEARCH,  30 December 1996 (1996-12-30), XP002132994 | | |

—/—

The present search report has been drawn up for all claims

| Place of search | Date of completion of the search | Examiner |
|---|---|---|
| THE HAGUE | 7 June 2001 | Paraf, E |

CATEGORY OF CITED DOCUMENTS

X : particularly relevant if taken alone
Y : particularly relevant if combined with another document of the same category
A : technological background
O : non–written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

22

**European Patent Office**

## EUROPEAN SEARCH REPORT

Application Number

EP 00 40 3721

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| T | "Napster joins MusicNet" CNNFN, 'Online! 5 June 2001 (2001-06-05), XP002168854 Retrieved from the Internet: <URL:http://cnnfn.cnn.com/2001/06/05/techn ology/napster/> 'retrieved on 2001-06-06! * the whole document * | 1,2,6 | |
| | | | TECHNICAL FIELDS SEARCHED (Int.Cl.7) |

The present search report has been drawn up for all claims

| Place of search | Date of completion of the search | Examiner |
|---|---|---|
| THE HAGUE | 7 June 2001 | Paraf, E |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03 82 (P04C01)

## ANNEX TO THE EUROPEAN SEARCH REPORT
## ON EUROPEAN PATENT APPLICATION NO.

EP 00 40 3721

This annex lists the patent family members relating to the patent documents cited in the above-mentioned European search report.
The members are as contained in the European Patent Office EDP file on
The European Patent Office is in no way liable for these particulars which are merely given for the purpose of information.

07-06-2001

| Patent document cited in search report | | Publication date | Patent family member(s) | | Publication date |
|---|---|---|---|---|---|
| EP 0809221 | A | 26-11-1997 | JP | 10222579 A | 21-08-1998 |
| WO 0062265 | A | 19-10-2000 | AU | 4210800 A | 14-11-2000 |
| WO 9913398 | A | 18-03-1999 | EP | 1012702 A | 28-06-2000 |
| EP 0993163 | A | 12-04-2000 | JP | 2000137641 A | 16-05-2000 |
| US 5337357 | A | 09-08-1994 | CA | 2120816 A | 18-12-1994 |
| | | | EP | 0636962 A | 01-02-1995 |

For more details about this annex : see Official Journal of the European Patent Office, No. 12/82